# EUROPEAN PATENT APPLICATION

(11) **EP 4 799 771 A1**
(43) Date of publication of application: **02.09.2026**
(21) Application number: 25382177.1
(22) Date of filing: 26.02.2025
(51) Int. Cl.: B25J 9/16

(54) **METHODS AND SYSTEMS FOR GENERATING TRAJECTORIES FOR A ROBOTIC SYSTEM**

(71) Applicant: Universidad Miguel Hernández de Elche, 03202 Elche, Alicante (ES)
(72) Inventor: SABATER NAVARRO, José María, 03202 ELCHE, Alicante (ES); MANRIQUE CÓRDOBA, Juliana, 03202 ELCHE, Alicante (ES); DE LA CASA LILLO, Miguel Ángel, 03202 ELCHE, Alicante (ES)
(74) Representative: Elion IP, S.L.

(57) **Abstract**

The disclosure refers to a system and method for generating trajectories for a robot. The method comprises receiving multidimensional trajectory data, the trajectory data being relative to a plurality of trajectories and comprising a set of points wherein each point is defined by a set of magnitudes, the magnitudes being a position, a velocity and at least one additional parameter. The method further comprises, for each trajectory, normalizing the trajectory data by magnitudes; sampling the normalized trajectory data by applying a multi-dimensional simplification algorithm; discretizing the sampled trajectory data according to a predefined resolution; encoding the discretized data in the form of a codebook; feeding a Hidden Markov Model with the coded trajectory data corresponding to each trajectory; and generating, by the Hidden Markov Model, a set of predicted states to be decoded, within the range of each data magnitude, into a proposed trajectory for the robot.

## Description

### TECHNICAL FIELD

The present invention refers generally to the field of robot management, and more particularly to a method and system for generating trajectories for a robotic system. The solution herein disclosed can be applied in different technical fields, but it is specially indicated for robotic systems used in robot-assisted surgery.

### BACKGROUND

Robot trajectories play a crucial role in a wide range of applications, such as task planning, enhancing energy efficiency, and assisting in surgical operations. A robotic trajectory outlines the path, speed, and acceleration of the robot's end effector throughout its movement. These trajectories are usually designed by considering various factors, including the robot's kinematics, dynamics, physical limitations, and external elements like obstacles and the surrounding environment.

Beyond their industrial and medical uses, robotic trajectories are also critical in robotics research and development. Learning from demonstration (LfD) is the technique in which robots acquire new skills by learning to imitate an expert. The choice of LfD over other robot learning methods is compelling when ideal behavior can be neither easily scripted (as is done in traditional robot programming) nor easily defined as an optimization problem but it can be demonstrated. In LfD, trajectory learning involves capturing and generalizing the movements shown by a human operator. The main benefit of this approach is that it removes the need for complex technical expertise when programming robots. LfD's intuitive programming style has the potential to expand the use of robots in both manufacturing and service industries, including clinical, office, and home settings. In robotics, LfD is often used to help robots acquire skills at the trajectory level, which entails modeling the demonstrated movements and creating a generalized version that the robot can replicate. To account for the natural variability in human movements, many researchers have applied probabilistic models using data from multiple demonstrations. For example, techniques like Hidden Markov Models (HMM) and Gaussian Mixture Models (GMM) have been used to model task demonstrations at the trajectory level. Among these methods, HMMs are particularly popular in robotics LfD for modeling and analyzing human movements, due to their robustness in handling variations in spatiotemporal sequential data.

While LfD focuses on acquiring and generalizing complex human-like movements for robots, trajectory simplification techniques complement this by optimizing the training data, making it more efficient for processing and execution. In LfD, trajectory learning typically involves high-dimensional data with inherent stochastic variations, which can be computationally demanding. Simplification methods like the Douglas-Peucker and Visvalingam-Whyatt algorithms help reduce the complexity of this data by condensing the trajectory while maintaining key path features. This, in turn, enhances the efficiency and responsiveness of robots trained via LfD in real-world applications. By combining simplification techniques with LfD, robots' performance across various fields, such as manufacturing, service, and healthcare, can be significantly improved in terms of both efficiency and adaptability.

Trajectory and geometry simplification is a core technique in robotics, navigation systems, and computer graphics. It focuses on reducing the number of points in paths or shapes without losing their fundamental structure. This optimization leads to faster processing, lower memory usage, and quicker trajectory planning. The Douglas-Peucker algorithm, originally developed for cartographic generalization, is a classic approach that reduces the number of vertices by eliminating points that fall outside a predetermined threshold. Another method, the Visvalingam-Whyatt algorithm, simplifies a path by removing points with the smallest "effective area," preserving the essential shape. The sleeve-fitting technique adapts path segments to a virtual "sleeve," removing minor deviations to facilitate tracking. The Reumann-Witkam algorithm simplifies trajectories by maintaining points within a "band" parallel to the original segment, making it suitable for straight or slightly curved lines, though it can cause distortions in more complex trajectories. However, most existing geometry and trajectory simplification algorithms are designed for two-dimensional or at most, three-dimensional spaces.

The solutions that currently exist and use models for the generation of trajectories for robots in complex processes, said generation being carried out from trajectories previously captured by LfD techniques, generally only use kinematic information associated with each point of the demonstrated trajectories for the generation of the trajectory with the model for the robotic system and therefore, in the learning process, neither dynamic information such as the force exerted by the user on a certain section of the trajectory nor relative location relationships between the trajectories are taken into account. Hence, this input trajectory data can be multidimensional and contain a plurality of magnitudes or parameters such as positions, velocities, accelerations, angles, forces, etc., associated to each point of the trajectory which may present very significant quantitative variations between them. For example, while the position of each point of the trajectory can be delimited within a relatively small range, the velocities associated to each point can present very high variations. Therefore, if a normalization and subsequent simplification of the trajectory data set is carried out for the whole dataset it may happen that either the values that present greater deviations are discarded, which could lead to certain parameters being underrepresented and the generated trajectory being inaccurate and definite, or the values with greater deviations are considered, which will increase the computational cost and also introduce certain deviations in the generated trajectory, again leading to the generation of inaccurate and inefficient trajectories.

Therefore, there is a need in the state of the art for a method and system for generating trajectories for robotic systems that is able to consider multidimensional trajectory data in the training of models for the generation of trajectories for robotic systems and to normalize the multidimensional trajectory data set by magnitudes such that a compromise between the computational load and the accuracy of the trajectories generated by the model is achieved.

### DESCRIPTION

A first object of the present disclosure refers to a computer implemented method for generating trajectories for a robotic system. As used herein, a robotic system may refer to a single robot or to a plurality of robots acting together to perform tasks. The method comprises the following steps:
receiving multidimensional trajectory data, the trajectory data being relative to at least one trajectory and comprising a set of points wherein each point is defined by a set of magnitudes or parameters. These magnitudes or parameters are the position, the velocity and at least one additional parameter. The received multidimensional data may be data from any robot learning methods. For example, this multidimensional data may come from trajectories generated by a user within a Learning from Demonstration framework that will be used to train the model or may be multidimensional trajectory data generated in any other procedure for generating trajectories for robots. As used herein, the term "multidimensional" may refer to the magnitudes that define each point of the trajectory. Therefore, as used herein, the multidimensional trajectory data refers to trajectory data in which each point of the trajectory is defined by at least three magnitudes or parameters, these magnitudes or parameters being the spatial position of each point (2D, [X,Y], or 3D, [X,Y,Z]), the velocity in each of the spatial dimension (V_{X}, V_{Y},V_{Z}) and an additional magnitude or parameter.

For the received multidimensional trajectory data relative to each trajectory, the method further comprises:
normalizing the received multidimensional trajectory data by magnitudes. In other words, since the trajectory data is multidimensional, i.e., each point in the trajectory is associated to at least three magnitudes including the position, velocity and an additional parameter, the normalization is carried out for each magnitude individually. For example, the values of the position magnitude of all the points in the trajectory data are normalized individually and separately from the values of the velocity magnitude or from the values of the force magnitude, etcetera, respectively;
sampling the normalized trajectory data by applying a multi-dimensional simplification algorithm. Examples of these simplification algorithms may be Reumann-Witkam algorithm, Douglas-Peucker algorithm or the Visvalingam-Whyatt algorithm, among others;
discretizing the sampled trajectory data according to a predefined resolution. This resolution may be previously selected by a user depending on the precision required for the task carried out by the robotic system. For example, if the robotic system is a surgery assisted robot and the task is milling a bone this resolution may depend on the size of the drill, or if the task is cauterization, this resolution may depend on the area of influence of the cauterizer; and
encoding the discretized data in the form of a codebook. As used herein, the term "codebook" may refer to cartesian tables where each possible combination of parameters is associated to a discrete code. These codebooks are also known as "look-up tables".

The method further comprises:
feeding a Hidden Markov Model, HMM, with the coded trajectory data corresponding to each trajectory. As used herein, a "Hidden Markov Model" may refer to a statistical model that can be used to describe the evolution of observable events that depend on internal factors, which are nor directly observable;
generating, by the Hidden Markov Model, a set of predicted states to be decoded into a proposed trajectory for the robotic system. These predicted states correspond to points of the proposed trajectory for the robotic system;
decoding the most probable sequence of predicted states within the range of each data magnitude; and
generating a sequence of keypoints based on the decoded sequence of predicted states, the keypoints corresponding to trajectory points of the proposed trajectory for the robotic system. This generated trajectory is not only a kinematic trajectory, but it includes information relative to other parameters or magnitudes from the learning trajectories. In other words, the generated trajectory respects what it has learned from the learning trajectories, i.e., if in a certain area of the workspace not much force was exerted (by any of the users generating the learning trajectories), the proposed trajectory complies with that characteristic. The same applies to other parameters. For example, having a particular angle of attack of a surgical instrument in a surgery (each user in a LfD method has used a slightly different one), the proposed trajectory respects an angle consistent with what has been learned.

In some embodiments, the robotic system comprises more than one robot acting together to perform a particular task so that the step of receiving trajectory data comprises receiving trajectory data of trajectories associated with the plurality of robots, the step of generating the set of predicted states comprises generating a set of predicted states to be decoded into a proposed trajectory for each robot of the plurality of robots, the step of decoding the most probable sequence of predicted states comprises decoding the most probable sequence associated to each proposed trajectory for each robot of the plurality of robots and the step of generating the sequence of keypoints comprises generating sequences of keypoints based on the respective decoded sequences of predicted states such that each sequence of keypoints corresponds to the trajectory points of the respective proposed trajectory for each robot of the plurality of robots.

In some embodiments, the at least one additional parameter is selected from a list comprising accelerations, jerks, orientations, angular velocities, forces and geometric relations between trajectories of different robotic systems of a plurality of robotic systems.

In some embodiments, the workspace for generating the trajectories is a two-dimensional workspace or a three-dimensional workspace.

In some embodiments, the step of sampling the trajectory data comprises:
detecting deviations in any of the magnitudes of the normalized trajectory data from predefined thresholds for each magnitude;
identifying the points in the normalized trajectory data having the deviations in any of the magnitudes as key points; and
increasing the number of points sampled from the normalized trajectory data around the identified key points. The purpose of this sampling is to minimize the number of points in the trajectory data but without missing any point where there has been a significant variation of any magnitude or parameter. For example, in a straight line with variation of velocities, not only the starting and end points are kept, but also the points where the velocity significantly varies. This can be applied to all the magnitudes that define the points of the trajectory.

In some embodiments, the multi-dimensional simplification algorithm is a Douglas-Peucker based dimensional-expansion simplification algorithm. Douglas-Peucker is a very efficient algorithm because it is computationally very simple. It is executed in n-dimensions, the n-dimensions being the magnitudes that define each point of the learning trajectories. The advantage of the Douglas-Peucker based dimensional-expansion simplification algorithm over other simplification algorithms that were n-dimensional is the lower number of operations that needs to perform and that it allows to adjust the precision used in the subsequent discretizing step.

In some embodiments, the step of generating the set of predicted states comprises:
defining a transition matrix (A), wherein matrix values 'Aᵢⱼ' represents the probability of transitioning from state 'i' to state 'j'; and
defining an emission matrix (B), wherein matrix values 'Bᵢₖ' represents the probability of emitting symbol 'k' from state 'i'.

Defining these two matrices allows to increase the efficiency of the process (less steps are required to reach a valid model) of generating the trajectories for the robotic system. In other words, using these two matrices allows accelerating the leaning process of the HMM.

In some embodiments, the transmission matrix (A) and the emission matrix (B) are trained and then, a Viterbi algorithm is applied to both, the transmission matrix (A) and to the emission matrix (B), to identify the set of predicted states. By training these matrices, the values (weights) of Aᵢⱼ and Bᵢₖ that maximize the training sequences can be obtained. If it is started from already "coherent" Aᵢⱼ and Bᵢₖ values, a valid model (or just a model, because this model may not be obtained at all) for the generation of trajectories can be quickly obtained. Once the matrices have been trained, they can be used to obtain the most probable sequence of predicted states.

In some embodiments, the step of decoding the set of predicted states comprises applying the following equation to the predicted states: ${p}_{real = {min}_{i} + \frac{\left({p}_{discrete}+0.5\right) ∗ \left({max}_{i}-{min}_{i}\right)}{{CB}_{i}}}$ wherein 'maxᵢ' is the maximum value of the particular range of each magnitude within the original dataset, 'minᵢ' is the minimum value of the particular range of each magnitude within the original dataset, 'p_{discrete}' is the value of the predicted states generated by the Hidden Markov Model, 'pᵣₑₐₗ' is the rescaled value of the predicted states in the original range, and 'CBᵢ' is a total number of levels in the discretized range.

A second object of the present disclosure is a system for generating trajectories for robotic systems. Said system comprises:
a reception module configured to receive multidimensional trajectory data, the trajectory data being relative to at least one trajectory and comprising a set of points wherein each point is defined by a set of magnitudes, the magnitudes being a position, a velocity and at least one additional parameter;
wherein the system is characterized in that it comprises a controller that is configured to:
normalize the trajectory data by magnitudes;
sample the normalized trajectory data by applying a multi-dimensional simplification algorithm;
discretize the sampled trajectory data according to a predefined resolution;
encode the discretized data in the form of a codebook;
feed a Hidden Markov Model with the coded trajectory data corresponding to each trajectory;
generate, by the Hidden Markov Model, a set of predicted states to be decoded into a proposed trajectory for the robotic system;
cause the decoding, within the range of each data magnitude, of the most probable sequence of predicted states; and
cause the generation of a sequence of keypoints based on the decoded sequence of predicted states, the keypoints corresponding to trajectory points of the proposed trajectory.

In some embodiments, the system further comprises a transmission module configured to transmit the predicted states to a processing unit of a robotic system where the proposed trajectory is decoded and where the sequence of keypoints based on the decoded sequence of predicted states is generated. Alternatively, the controller of the system for generating trajectories may further execute the decoding of the most probable sequence of predicted states and the generation of the sequence of keypoints based on the sequence of predicted states and send these keypoints directly to the robotic system so the proposed trajectory can be implemented therein.

A third object of the present disclosure is a robotic system comprising the system for generating trajectories previously disclosed.

In some embodiments, the robotic system is at least a robotic arm.

In some embodiments, the robotic system is a surgical robot, and the trajectories are surgery trajectories. Preferably, the robot may be a surgical robotic arm or a robotic surgical system such as the da Vinci Surgical system

The solution herein disclosed presents some advantages over other existing solutions. It is a robust learning method, which allows the inclusion of other dimensions apart from the kinematics. It is computationally efficient, allows the integration (for the first time) of forces in a LfD scheme for trajectory generation for robotic systems and it allows to increase the autonomy of the robot by making it consider the interaction forces within its autonomy. The solution herein disclose further allows, in a scheme with cobots (collaborative robots - this term is globally accepted) to learn the robot-user force interaction and can be implemented in the robot controller.

### BRIEF DESCRIPTION OF THE DRAWINGS

To complete the description and in order to provide for a better understanding of the disclosure, a set of drawings is provided. Said drawings form an integral part of the description and illustrate an example of the disclosure, which should not be interpreted as restricting the scope of the disclosure, but just as an example of how the disclosure can be carried out.

The drawings comprise the following figures:
Figure 1 shows a flow diagram of a method for generating trajectories for a robotic system, according to some embodiments of the disclosure.
Figure 2 shows a flow chart of a method for generating trajectories for robotic systems, according to other embodiments of the disclosure.
Figure 3 shows an example of an application of the method for generating trajectories for a robotic system, according to an embodiment of the disclosure.
Figure 4 shows another example for an application of the method for generating trajectories for a multi-arm robotic system, according to an embodiment of the disclosure.
Figure 5 shows a block diagram of a system for generating trajectories for robotic systems, according to some embodiments of the disclosure.

### DESCRIPTION OF EXAMPLES

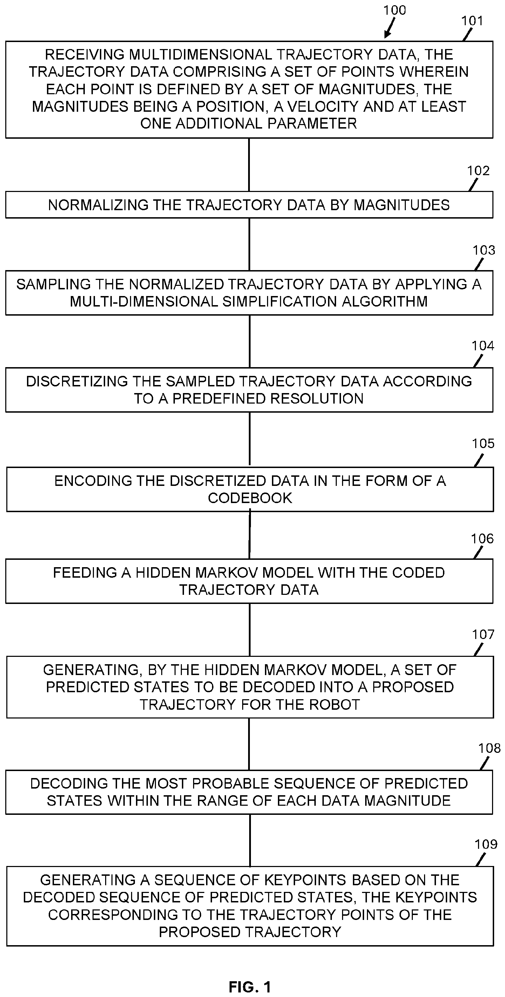

Figure 1 shows a flow diagram of a computer implemented method 100 for generating trajectories for a robotic system. This robotic system may be a surgical robotic system and the trajectories generated may be surgical trajectories to be applied by the robotic system.

At step 101 of the method 100, multidimensional trajectory data is received. This multidimensional trajectory data may be generated by an expert within an LfD framework/scheme in which the trajectories generated by such an expert are captured by a set of sensors. For example, the expert may be a surgeon carrying out a surgical procedure in which positions, velocities, accelerations, jerks, etc., of the surgical instrument held by the surgeon are captured by a set of sensors and used to train the model. The received trajectory data refers to the trajectories performed by the surgeon with the surgical instrument and comprises a set of points wherein each point is defined by a set of magnitudes or parameters. These magnitudes or parameters are the kinematics (position and velocity) and other parameters such as accelerations, jerks, etc. The workspace in which the surgeon is generating the learning trajectories can be 2D (a plane for example) or 3D.

At step 102 of the method 100, the received multidimensional trajectory data is normalized by magnitudes. In particular, if each point of the trajectory data is, for example, defined by its position, velocity, force and angular velocity, the values of the position of all the points in the trajectory data are normalized together and independently from the rest of magnitudes. Similarly, the values of the velocity, force and angular velocities are also respectively and independently normalized. As part of this normalization step 102, the maximum and minimum values of each magnitude can be identified and stored. These maximum and minimum values determine the corresponding magnitude range.

At step 103 of the method 100, the normalized trajectory data is sampled by applying a multi-dimensional simplification algorithm. Preferably, a Douglas-Peucker based dimensional-expansion simplification algorithm is applied to the normalized trajectory data to carry out the sampling. This sampling reduces the number of points in the trajectory data but avoids missing any point of the learning trajectory where there has been a significant variation of any magnitude or parameter.

At step 104 of the method 100, the sampled trajectory data is discretized according to a predefined resolution. For example, this resolution will be selected based on the required precision for the task carried out by the robotic system. The higher the precision required, the higher the resolution applied to the discretization of trajectory data and vice versa.

At step 105 of the method 100, the discretized data is encoded in the form of a codebook within the predefined resolution, based on the normalized magnitude.

At step 106 of the method 100, a Hidden Markov Model is feed with the coded trajectory data corresponding to each of the trajectories to which the received trajectory data refers.

At step 107 of the method 100, the Hidden Markov Model generates the set of predicted states to be decoded into a proposed trajectory for the robotic system. These predicted states correspond to points of the proposed trajectory for the robotic system.

At step 108 of the method 100, the most probable sequence of predicted states is decoded within the range of each data magnitude. This range of each magnitude has been previously detected and stored at step 102.

At step 109 of the method 100, a sequence of keypoints based on the decoded sequence of predicted states is generated. These keypoints correspond to the trajectory points of the proposed trajectory for the robotic system. Thus, at step 109 the trajectory for the robotic system is generated, said trajectory being based on a Hidden Markov Model trained with the received trajectory data at step 101. The generated trajectory will have considered all the magnitudes that define the points in the learning trajectory. For this particular embodiment, the trajectories generated for the robotic systems will include information learnt relative to the kinematics and also to the accelerations, jerks, etc.

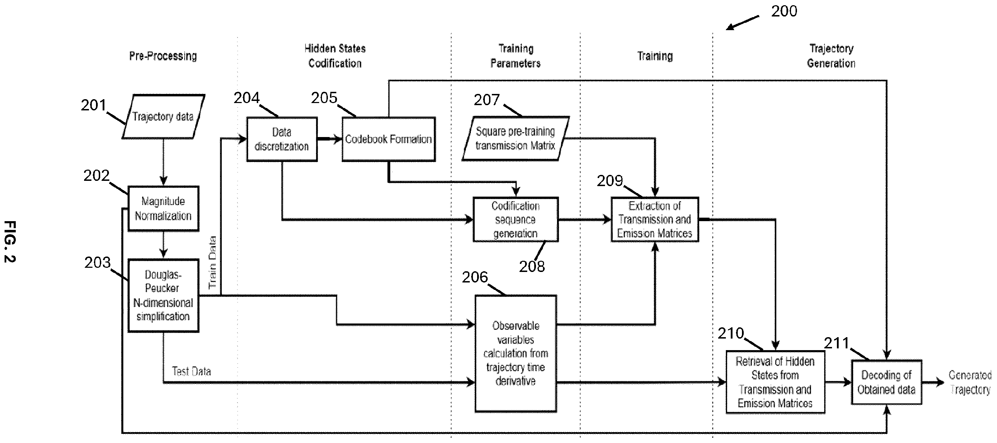

Figure 2 shows a relational flow chart of a method 200 for generating trajectories for robotic systems, according to other embodiments of the disclosure.

As depicted in Figure 2, the steps of receiving 201 the trajectory data, applying 202 the normalization by magnitudes to the received trajectory data and sampling 203 the trajectory data, by applying a Douglas-Peucker based dimensional-expansion simplification algorithm, are part of the stage of pre-processing the trajectory data coming from the learning trajectories. These learning trajectories can be generated within a robot learning scheme such as an LfD method or can be digitally generated trajectories for programming robots.

Part of the sampled trajectory data (training data) is used for training the Hidden Markov Model and the rest of the trajectory data (test data) is used for validating whether the generated trajectory is correct, or it is not. This validation is carried out by calculating the trajectory time derivative 206 from the test data and feeding it to the previously trained HMM 210, in order to obtain the decoded trajectory 211, that can be compared with the test data trajectory.

The information regarding training trajectory data is discretized 204 based on a required resolution and encoded 205 in the form of a codebook within the specified resolution. These steps are part of the stage of codification of the hidden states of the HMM. Then, a square pre-training transmission matrix is defined 207. This square pre-training transmission matrix comprises a transmission matrix (A), wherein matrix values 'Aᵢⱼ' represents the probability of transitioning from state 'i' to state 'j' and an emission matrix (B), wherein matrix values 'Bᵢₖ' represents the probability of emitting symbol 'k' from state 'i'. The weights initially assigned to the matrices are those that make the subsequent matrices training process, and thus of the HMM, more efficient. It is also generated 208 a codification sequence, i.e., the coded trajectory data, from the codebook. The generation of the square pre-training transmission matrix and of the codification sequence are the stage of generation of the pre-training parameters. The information regarding execution time of the training trajectory data is processed in order to calculate the trajectory time derivative 206, in order to be fed into the HMM training process.

The stage of training of the model comprises extraction of the transmission (A) and emission matrices 209. In other words, the transmission (A) and emission (B) matrices are trained assigning new weights to the matrix values 'Aᵢⱼ' and 'Bᵢₖ'.

The stage of generation of the trajectory comprises retrieving 210 the hidden states from the transmission (A) and emission (B) matrices. In other words, the set of predicted states to be decoded into a proposed trajectory for the robotic system are retrieved from said matrices. Then, the most probable sequence of predicted states is decoded 211 and the proposed trajectory is obtained as the sequence of keypoints based on the decoded sequence of predicted states. These keypoints will correspond to trajectory points of the proposed trajectory.

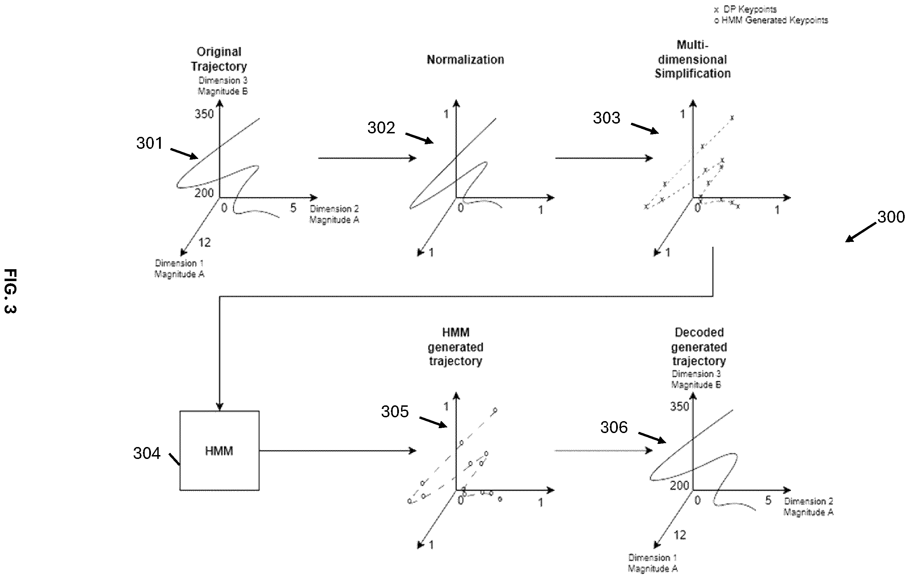

Figure 3 shows an example 300 of application of the method for generating trajectories for robotic systems, according to an embodiment of the disclosure.

In such example, an original (training) trajectory 301 has been generated using a trajectory learning method, such as the LfD. This trajectory is a set of points defined by their 2D position, its corresponding velocities in each axis (not displayed in the Figure) and a magnitude of the force exerted by the expert. Figure 3 displays three dimensions from all the available information, first dimension is position X, with ranges between 0 and 12, second dimension is position Y, ranges between 0 and 5, and the last dimension displayed is the magnitude of the force, with ranges between 200 and 350. Figure 3 shows a three-dimensional representation of the points in the trajectory. Additional information such as velocity in each axis, with range between 10 and 15, is not displayed. Then, the trajectory data is normalized by magnitudes, i.e. the position is normalized individually and independently from force and velocity, the velocity is normalized individually and independently from position and force and the force is normalized individually and independently from the position and velocity. Thus, the three magnitudes range from 0 and 1 now. The resulting normalized trajectory 302 is slightly compressed with respect to the original trajectory 301.

Then, the normalized trajectory data is sampled by applying a multi-dimensional simplification algorithm, for example a Douglas-Peucker based dimensional-expansion simplification algorithm. The resulting multidimensional sampled trajectory 303 shows a set of keypoints (marked with 'x' in the figure) within the trajectory data that represent those points in which it has been detected a change in any of the three dimensions that is above a predefined threshold. That is to say, a threshold has been previously defined for all the already normalized magnitudes. Then, those points whose at least one of its dimensions exceed their corresponding threshold are selected as samples. Once these sampled points have been discretized according to a predefined resolution and encoded in the form of a codebook within the range of each data magnitude, they are sent to an HMM 304 that generates a set of predicted states to be decoded into a proposed trajectory for the robotic system. These decoded predicted states are represented as circles in 305.

After that, the most probable sequence of predicted states is decoded and a sequence of keypoints based on the decoded sequence of predicted states is generated. These keypoints are the trajectory points of the proposed trajectory 306. The de-codification process allows the proposed trajectory 306 to be adjusted to the original magnitude ranges.

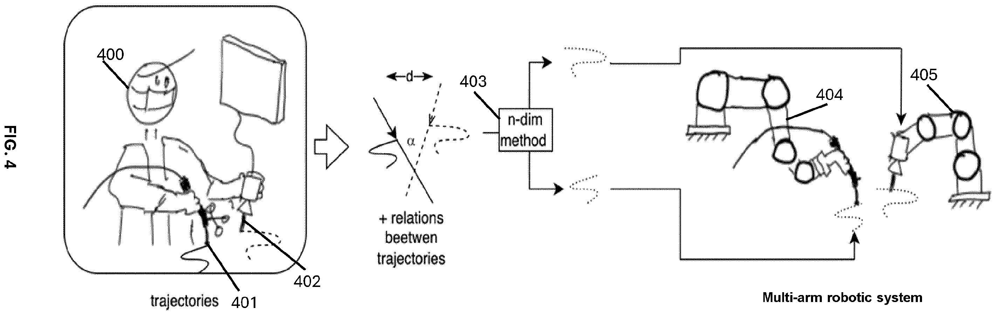

Figure 4 shows another example for an application of the method for generating trajectories for a multi-arm robotic system, according to an embodiment of the disclosure

In such an embodiment a surgeon 400 is depicted handling two surgical instruments 401,402 which are used together for a carrying out a surgical procedure. While the surgical instrument he is holding in his right hand 401 may be a milling tool, a cauterization instrument, a laparoscopic instrument, etc., the surgical instrument he is holding in his left hand 402 may be a camera connected to a tv screen. These two surgical instruments have to cooperate together during the surgery so they must maintain some geometric relations between their trajectories, including a distance or an angular position relative to each other. The surgeon 400 with these two surgical instruments 401,402 is generating two different and interrelated trajectories. Then, the same method 403 for generating trajectories explained for Figure 3 is applied to each trajectory, but with the trajectory data corresponding to each trajectory comprising points defined by its position, velocity and at least the distance between both trajectories and the angular position relative to each other. Other magnitudes, as the jerks, accelerations or forces, among others, could be also taken into account. The trajectories generated by the method are used to feed the multi-arm robotic system formed by two different robotic arms 404,405 that will execute the surgical procedure by following the two generated trajectories.

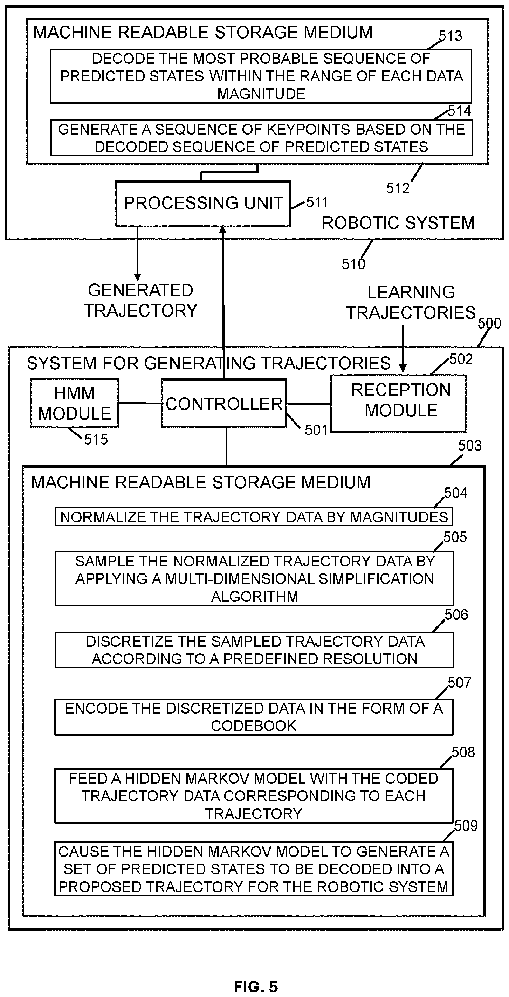

Figure 5 shows a block diagram of a system 500 for generating trajectories for robotic systems, according to some embodiments of the disclosure. It should be understood that the vice 500 depicted in Figure 5 may include additional components and that some of the components described herein may be removed and/or modified without departing from the scope of the system 500. Additionally, implementation of the system 500 is not limited to such example. The system 500 comprises a controller 501, a reception module 502 and a Hidden Makov Model (HMM) module 515 communicatively coupled to the controller 501. The reception module 502 is configured to receive multidimensional trajectory data, the trajectory data being relative to at least one trajectory and comprising a set of points wherein each point is defined by a set of magnitudes, the magnitudes being a position, a velocity and at least one additional parameter. The system 500 further comprises a machine-readable storage medium 503 storing instructions 504-509 to be executed by a controller 501.

Figure 5 further depicts a robotic system 510, e.g., a surgery-assisted robot, that comprises a processing unit 511 communicatively coupled to another machine-readable storage medium 512 storing instructions 513-514 to be executed by a processing unit 511. The controller 501 of the system is also communicatively coupled to the processing unit 511 of the robot 510 to cause the processing unit 511 to execute said instructions 513-514.

In such embodiment, the controller 501 normalizes 504 the received trajectory data by magnitudes, samples 505 the normalized trajectory data by applying a multi-dimensional simplification algorithm, discretizes 506 the sampled trajectory data according to a predefined resolution and encodes 507 the discretized data in the form of a codebook within the specified resolution. Then, the controller feeds 508 a Hidden Markov Model (HMM) module with the coded trajectory data corresponding to each trajectory and cause 509 the HMM module to generate a set of predicted states to be decoded into a proposed trajectory for the robotic system.

After that, the controller 501 instructs the processing unit 511 of the robotic system 510 to decode 513 of the most probable sequence of predicted states within the range of each data magnitude and to generate 514 a sequence of keypoints based on the decoded sequence of predicted states, the keypoints corresponding to trajectory points of the proposed trajectory.

The controller 501 and the processing unit 511 may include hardware logic to perform the functionalities described above in relation to instructions 504-509 and 513-514, respectively. The machine-readable storage mediums 503 and 512 may be located either in the computing device executing the machine-readable instructions, or remote but accessible to the computing device (e.g., via a computer network) for execution.

As used herein, a "machine-readable storage medium" may be any electronic, magnetic, optical, or other physical storage apparatus to contain or store information such as executable instructions, data, and the like. For example, any machine-readable storage medium described herein may be any hardware memory such as a finite state machines or similar. Further, any machine-readable storage medium described herein may be non-transitory. In examples described herein, a machine-readable storage medium or media may be part of an article (or article of manufacture). An article or article of manufacture may refer to any manufactured single component or multiple components.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein but also encompasses any variations that may be considered by any person skilled in the art within the general scope of the invention as defined in the claims.

## Claims

1. A computer implemented method (100) for generating trajectories for a robotic system, the method comprising:
receiving (101) multidimensional trajectory data, the trajectory data being relative to at least one trajectory and comprising a set of points wherein each point is defined by a set of magnitudes, the magnitudes being a position, a velocity and at least one additional parameter;
wherein, for the trajectory data relative to each trajectory, the method is **characterized in that** it comprises:
normalizing (102) the trajectory data by magnitudes;
sampling (103) the normalized trajectory data by applying a multi-dimensional simplification algorithm;
discretizing (104) the sampled trajectory data according to a predefined resolution;
encoding (105) the discretized data in the form of a codebook; and
feeding (106) a Hidden Markov Model with the coded trajectory data corresponding to each trajectory;
generating (107), by the Hidden Markov Model, a set of predicted states to be decoded into a proposed trajectory for the robotic system;
decoding (108) the most probable sequence of predicted states within the range of each data magnitude; and
generating (109) a sequence of keypoints based on the decoded sequence of predicted states, the keypoints corresponding to trajectory points of the proposed trajectory.

2. The computer implemented method (100) according to claim 1, wherein the step of receiving (101) trajectory data comprises receiving trajectory data of trajectories associated to a plurality of robotic systems, the step of generating (107) the set of predicted states comprises generating a set of predicted states to be decoded into a proposed trajectory for each robotic system of the plurality of robotic systems, the step of decoding (108) the most probable sequence of predicted states comprises decoding the most probable sequence associated to each proposed trajectory for each robotic system of the plurality of robotic systems and the step of generating (109) the sequence of keypoints comprises generating sequences of keypoints based on the respective decoded sequences of predicted states such that each sequence of keypoints corresponds to the trajectory points of the respective proposed trajectory for each robotic system of the plurality of robotic systems.

3. The computer implemented method (100) according to claim 1 or 2, wherein the at least one additional parameter is selected from a list comprising accelerations, jerks, orientations, angular velocities, forces and geometric relations between trajectories of different robotic systems of a plurality of robotic systems.

4. The computer implemented method (100) according to any one of the preceding claims, wherein the workspace for generating the trajectories is a two-dimensional workspace or a three-dimensional workspace.

5. The computer implemented method (100) according to any one of the preceding claims, wherein the step of sampling (103) the trajectory data comprises:
detecting deviations in any of the magnitudes of the normalized trajectory data from predefined thresholds for each magnitude;
identifying the points in the normalized trajectory data having the deviations in any of the magnitudes as key points; and
increasing the number of points sampled from the normalized trajectory data around the identified key points.

6. The computer implemented method (100) according to any one of the preceding claims, wherein the multi-dimensional simplification algorithm is a Douglas-Peucker based dimensional-expansion simplification algorithm.

7. The computer implemented method (100) according to any one of the preceding claims, wherein the step of generating (107) the set of predicted states comprises:
defining a transition matrix (A), wherein matrix values 'Aᵢⱼ' represents the probability of transitioning from state 'i' to state 'j'; and
defining an emission matrix (B), wherein matrix values 'Bᵢₖ' represents the probability of emitting symbol 'k' from state 'i'.

8. The computer implemented method (100) according to claim 7, comprising, once the transmission matrix (A) and the emission matrix (B) have been trained, applying a Viterbi algorithm to the transmission matrix (A) and to the emission matrix (B) to identify the set of predicted states.

9. The computer implemented method (100) according to any one of the preceding claims, wherein decoding (108) the set of predicted states comprises applying the following equation to the predicted states: ${p}_{real = {min}_{i} + \frac{\left({p}_{discrete}+0.5\right) ∗ \left({max}_{i}-{min}_{i}\right)}{{CB}_{i}}}$ wherein 'maxᵢ' is the maximum value of the particular range of each magnitude within the original dataset, 'minᵢ' is the minimum value of the particular range of each magnitude within the original dataset, 'p_{discrete}' is the value of the predicted state generated by the Hidden Markov Model, 'pᵣₑₐₗ' is the rescaled value of the predicted state in the original range, and 'CBᵢ' is a total number of levels in the discretized range.

10. A system (500) for generating trajectories for a robotic system that comprises:
a reception module (502) configured to receive multidimensional trajectory data, the trajectory data being relative to at least one trajectory and comprising a set of points wherein each point is defined by a set of magnitudes, the magnitudes being a position, a velocity and at least one additional parameter;
wherein the system (500) is **characterized in that** it comprises a controller (501) that is configured to:
normalize (504) the trajectory data by magnitudes;
sample (505) the normalized trajectory data by applying a multi-dimensional simplification algorithm;
discretize (506) the sampled trajectory data according to a predefined resolution;
encode (507) the discretized data in the form of a codebook;
feed (508) a Hidden Markov Model with the coded trajectory data corresponding to each trajectory;
generate (509), by the Hidden Markov Model, a set of predicted states to be decoded into a proposed trajectory for the robotic system;
cause (513) the decoding, within the range of each data magnitude, of the most probable sequence of predicted states; and
cause (514) the generation of a sequence of keypoints based on the decoded sequence of predicted states, the keypoints corresponding to trajectory points of the proposed trajectory.

11. The system (500) according to claim 10, comprising a transmission module configured to transmit the predicted states to a processing unit (511) of a robotic system (510) where the proposed trajectory is decoded and where the sequence of keypoints based on the decoded sequence of predicted states is generated.

12. A robotic system comprising the system according to claim 10 or 11.

13. The robotic system according to claim 12, wherein the robotic system is at least a robotic arm.

14. The robotic system according to claim 12 or 13, wherein the robotic system is a surgical robot and the trajectories are surgery trajectories.
